# EUROPÄISCHE PATENTSCHRIFT

(11) **EP 3 188 870 B1**
(45) Veröffentlichungstag und Bekanntmachung des Hinweises auf die Patenterteilung: **31.03.2021**
(21) Anmeldenummer: 15753931.3
(22) Anmeldetag: 18.08.2015
(51) Int. Cl.: B23K 101/04, B23K 35/22, B32B 15/01, C22C 19/05, C22C 19/07, C22C 45/00, B23K 1/00, B23K 1/002, B23K 1/20, B23K 103/04, B23K 103/18, B23K 3/047, B23K 35/02, B23K 35/30

(54) **VERFAHREN ZUM HARTLÖTEN UND VERWENDUNG EINER HARTLÖTFOLIE ZUM INDUKTIONSLÖTEN**
HARD SOLDERING METHOD, AND USE OF A HARD SOLDERING FILM FOR INDUCTION SOLDERING
PROCÉDÉ DE BRASAGE FORT ET UTILISATION D'UNE FEUILLE DE BRASAGE FORT POUR BRASAGE PAR INDUCTION

(30) Priorität: 05.09.2014 DE 102014112831
(43) Veröffentlichungstag der Anmeldung: 12.07.2017
(73) Patentinhaber: Vacuumschmelze GmbH & Co. KG, 63450 Hanau (DE)
(72) Erfinder: HARTMANN, Thomas, 63674 Altenstadt (DE)
(74) Vertreter: Moore, Joanne Camilla
(86) Internationale Anmeldenummer: PCT/EP2015/068898
(87) Internationale Veröffentlichungsnummer: WO 2016/034395

(56) Entgegenhaltungen:
- EP-A1- 0 016 916
- EP-A2- 1 897 650
- WO-A1-2012/123860
- WO-A2-2004/037454
- JP-A- H08 267 230
- US-A1- 2003 038 161

## Beschreibung

Die Erfindung betrifft ein Verfahren zum Hartlöten und die Verwendung einer Hartlotfolie zum Induktionslöten.

Löten ist ein Verfahren zum Fügen von metallischen oder keramischen Teilen mit Hilfe eines geschmolzenen Zusatzwerkstoffes, der als Lot bezeichnet wird. Die Schmelztemperatur des Lotes liegt unterhalb derjenigen der Grundwerkstoffe der zu verbindenden Teile. Diese Teile werden benetzt ohne geschmolzen zu werden.

In Abhängigkeit von der Verarbeitungstemperatur des Lots unterscheidet man zwischen Weichlote und Hartlote. Weichlote werden bei Temperaturen unterhalb von 450°C verarbeitet und Hartlote hingegen bei Temperaturen oberhalb von 450°C. Hartlote werden bei Anwendungen eingesetzt, bei denen eine hohe mechanische Festigkeit der Lötverbindung und/oder eine hohe mechanische Festigkeit bei erhöhten Betriebstemperaturen gewünscht ist.

Ein Sonderfall des Hartlötens ist das Hochtemperaturlöten. Ein Hochtemperaturlot besitzt eine Liquidustemperatur oberhalb 900°C und wird in der Regel zum flussmittelfreien Löten unter sauerstofffreier Prozessatmosphäre, wie unter Vakuum oder einem Schutzgas eingesetzt. Hochtemperaturlote können neben erhöhten Festigkeitseigenschaften der Lötverbindung auch noch eine erhöhte Korrosionsbeständigkeit besitzen. Bei Ni-, Co-, und Fe- basierten Lotwerkstoffen kann diese Korrosionsbeständigkeit durch einen Chromzusatz erhöht werden.

Für das Hartlöten werden vor allem Lote auf Basis von Al, Mg, Pd, Au, Ag, Cu, Co und Ni eingesetzt, wie sie z.B. in DIN EN ISO 17672 "Hartlöten - Lote" beschrieben sind. Lote auf Basis von Al, Mg, Pd, Au, Ag und Cu werden in kristalliner Form als gewalzte Folien, Stäbe, Drähte und daraus hergestellter Formteile wie Beispielsweise aus Draht gebogene Ringe, oder aus Folien gestanzte Scheiben verwendet.

Hartlotlegierungen können auch als Lotpulver, das zum Beispiel mit einem Verdüsungsverfahren hergestellt wird, oder in Form von Lotpasten, bei denen die verdüsten Pulver mit organischen Binde- und Lösungsmitteln vermengt werden, eingesetzt werden.

Hartlote aus der Legierungsgruppe der Ni, Co oder Fe-Lote, wie auch manche Cu-Lote, weisen zur Schmelzpunkterniedrigung der Legierungsmatrix einen gewissen Anteil an Elementen mit stark schmelzpunktabsenkender Wirkung, wie beispielsweise Bor, Phosphor, Silizium und Kohlenstoff auf, die den Lotlegierungen in Gehalten von mehr als 10 at.% beigemengt werden. Diese Elemente werden auch als Metalloide bezeichnet und haben den Nebeneffekt, dass entsprechende Lotlegierungen in kristallinem Zustand spröde sind und sich nicht gut umformen lassen.

Das Hartlot wird zwischen den zu verbindenden Komponenten eingebracht, oder daran angelegt. Das Hartlot und die Teile werden auf eine Temperatur aufgeheizt (Arbeitstemperatur des Lotes), die oberhalb der Liquidustemperatur des Hartlotes und unterhalb der Schmelztemperatur der Komponenten liegt. Das Lot schmilzt, benetzt diese Komponenten und füllt kapillare Fügespalte. Nach dem Erstarren des Lotes ist eine stoffschlüssige Verbindung hergestellt. Bei der Mehrzahl der Verbindungen entsteht die Bindung aufgrund von Kohäsionskräften in einer sehr kleinen Zone im Kontaktbereich zwischen Lot und Grundwerkstoff. Sie beruht auf Diffusion von Atomen des Lotes und des Grundwerkstoffs untereinander. Die beteiligten Elemente bilden dabei Mischkristalle, Eutektika oder intermetallische Phasen aus.

Die Teile können zum Beispiel in einem Ofen unter Vakuum oder einem Schutzgas aufgeheizt werden, wobei die gesamten Teile auf die Löttemperatur aufgeheizt werden. Alternativ kann ein selektives Erwärmungsverfahren verwendet werden, bei dem ein lokales Erwärmen der Fügestelle erreicht wird. Beispiele von selektiven Erwärmungsverfahren sind Flammlöten, Strahllöten und Induktionslöten. Beim Induktionslöten wird berührungslos ein magnetisches Wechselfeld in das Lötgut eingekoppelt, wobei die Wärmeenergie direkt im zu erwärmenden Lötgut erzeugt wird.

Die WO 2004/037454 A offenbart ein Material aus Edelstahlfolie mit einer Beschichtung aus Nickel oder einer Nickellegierung, die zu einem Rohr geformt und aufgeheizt wird, um das Material mit einer Doppelwandgestalt zu bilden.

Die US 2015/158126 A1 offenbart eine amorphe duktile nickel-basierte Hartlotfolie. Die EP 1 897 650 A1 und die EP 0 016 916 A1 offenbaren jeweils eine amorphe duktile Eisen-Nickel-basierte Hartlotfolie. Die US 2003/038161 A1 offenbart ein Verfahren zur Plattierung eines Metallbands zur Herstellung eines mehrwandigen Rohrs. JP H08 267230 A offenbart ein Verfahren zum Hartlöten eines Blechs.

Es ist wünschenswert, ein Verfahren zum Hartlöten bereitzustellen, mit dem eine zuverlässige Lötnaht auch in einem selektiven Erwärmungsverfahren hergestellt werden kann. Aufgabe ist es daher, ein Verfahren zum Hartlöten bereitzustellen, mit dem eine zuverlässige Lötnaht auch aus einer Legierung mit einem höheren Metalloidgehalt mit einem selektiven Erwärmungsverfahren hergestellt werden kann. Gelöst wird diese Aufgabe durch ein Verfahren zum Hartlöten gemäß Anspruch 1.

Erfindungsgemäß wird das Hartlot in Form einer Folie mit einem kurzgeschlossenen Strompfad zwischen zwei aufeinanderliegenden Lagen induktiv erwärmt. Die Hartlotfolie wird somit zu einem Ringband gewickelt, wobei zwei aufeinanderliegende Lagen des gewickelten Ringbands in elektrischem Kontakt stehen, um den kurzgeschlossen Strompfad zwischen den Lagen zu erzeugen. Durch den kurzgeschlossenen Strompfad können die für Induktionslötprozesse notwendigen Wirbelströme im Ringband erzeugt werden. Der kurzgeschlossene Strompfad im Ringband ermöglicht somit die Verwendung einer Hartlotfolie bei Induktionslötprozessen, für Hartlote, wie metalloidhaltige und chromhaltige Hartlotfolien, die in anderen Formen, wie Pulver bei Induktionslötprozessen nicht erfolgreich verwendet werden können.

Die amorphe oder teilamorphe Hartlotfolie weist einen Metalloidgehalt von 10 bis 30 Atom% auf, wobei die Elemente Si, B und P Metalloide sind. Dieser Metalloidgehalt wird verwendet, um die Liquidustemperatur des Hartlots einzustellen, sodass sie zum Hartlöten von zum Beispiel Stählen geeignet ist. Ein Hartlot mit einem Metalloidgehalt von 10 bis 30 Atom% lässt sich jedoch nicht zu einem Draht mittels Verarbeitungs- verfahren wie Ziehen und Hämmern formen, weil es für solche Umformverfahren zu spröde ist. Erfindungsgemäß wird das Hartlot in Form einer amorphen oder teilamorphen Hartlotfolie verwendet, die beispielsweise mit einer Rascherstarrungstechnologie hergestellt werden kann, damit sie um die Verbindungsstelle herum als Ringband angeordnet werden kann.

Aufgrund ihrer kleinen Partikelgröße lassen sich Metallpulver, unabhängig von ihrer Zusammensetzung in mittelfrequenten Induktionsfeldern nicht zum Schmelzen bringen und sind somit für solche Lötaufgaben ungeeignet.

Unter dem Begriff "amorph" wird zumindest 50 Volumenprozent amorphes Material verstanden. In einem Ausführungsbeispiel weist die Hartlotfolie zumindest 80 Volumenprozent amorphes Material auf. Unter dem Begriff "teilamorph" wird 20 bis 50 Volumenprozent amorphes Material verstanden.

Die Hartlotfolie wird somit nicht in Gestalt einer planaren Folie, wie ein geschlossener ebener Ring, die aus der Folie gestanzt oder geschnitten wird, sondern in Gestalt einer Spule mit Wicklungen aus einer bandförmigen Folie verwendet, wobei zumindest zwei der Wicklungen der Spule miteinander in elektrischem Kontakt stehen, um den kurzgeschlossenen Strompfad zu erzeugen. Die Gestalt eines gewickelten Ringbands ist gegenüber einem ausgestanzten Ring materialsparend, da wenige oder sogar keine Reste bei dessen Herstellen aus der Folie entstehen.

Die Gestalt eines gewickelten Ringbands kann um die Verbindungstelle zwischen zwei oder mehreren Teilen herum angeordnet und kann somit verwendet werden, um rohrförmige Teile miteinander hartzulöten.

Die Anzahl der Wicklungen kann ausgewählt werden, um die Menge an Hartlot einzustellen. Die Menge an Hartlot, die für eine bestimmte Anwendung notwendig ist kann unterschiedlich sein und kann zum Beispiel abhängig von der Spalte zwischen zwei Teilen sein, die miteinander verlötet werden sollten. Diese Menge kann durch eine entsprechende Anzahl von Wicklungen im Ringband bereitgestellt werden.

Die Ausführung der Hartlotfolie wird so gestaltet, dass die Leistungsübertragung in das Lotformteil derart optimiert ist, dass es sich gleichschnell oder schneller erhitzt als typische Grundwerkstoffe, jedoch nicht langsamer. Ein langsameres Erhitzen des Lotwerkstoffes kann zur Folge haben, dass sich der Grundwerkstoff dadurch überhitzt, oder thermisch überlastet wird, was zu unerwünschter Grobkornbildung, sowie Verschlechterung der technologischen Eigenschaften wie Festigkeit und Korrosionsbeständigkeit führen kann. Um in industrialisierten Prozessen, unter wirtschaftlichen Gesichtspunkten, Anwendung zu finden, sollte der Schmelzpunkt des Lotes innerhalb von maximal 30 Sekunden erreicht werden können, wofür Heizraten von etwa 35 K/sec. benötigt werden. Da es mit der erfindungsgemäßen Applikationsform möglich ist, ein Lotmaterial effektiv und schnell aufzuheizen, reduziert sich der Energiebedarf pro Lötstelle, sowie auch die Prozessdauer pro Lötstelle, was die Wirtschaftlichkeit des Lötverfahrens erhöht.

Ein robustes Lotformteil aus einer Hartlotfolie wird zur Verfügung bereitgestellt, welches einfach auf die für die jeweilige Fügestelle benötigte Lotmenge anzupassen ist, dessen Handhabung einfach und unproblematisch ist, und dessen Herstellung wirtschaftlich und kostengünstig erfolgen kann.

In einer Durchführungsform wird zunächst die Hartlotfolie um die Verbindungsstelle herum gewickelt und danach ein kurzgeschlossener Strompfad zwischen zumindest zwei aufeinanderliegende Lagen der Hartlotfolie erzeugt. Diese Durchführungsform kann zum Beispiel bei großen Teilen, und/oder bei Teilen, auf denen ein rohrförmiges Lotformteil nicht aufgeschoben werden kann, verwendet werden.

In einer weiteren Durchführungsform wird zunächst ein gewickeltes Ringband mit einem kurzgeschlossenen Strompfad zwischen mindestens zwei aufeinanderliegenden Lagen der Hartlotfolie hergestellt, um ein gewickeltes Ringband als Hartlotformteil herzustellen, und danach das Hartlotformteil um die Verbindungsstelle herum angeordnet. Diese Durchführungsform stellt somit ein Hartlotformteil bereit, das später eingesetzt werden kann. Diese Durchführungsform kann bei kleineren Teile und/oder rohrförmigen Teilen verwendet werden.

In einer Durchführungsform wird ein vorgefertigtes gewickeltes Ringband mit einem kurzgeschlossenen Strompfad zwischen zwei aufeinanderliegenden Lagen der Hartlotfolie bereitgestellt und das vorgefertigte Ringband an der Verbindungstelle angeordnet. Diese Durchführungsform kann sowohl bei kleineren Teile und/oder rohrförmigen Teilen als auch bei Anwendungen, bei denen zahlreiche Teile ähnlicher Formen hartgelötet werden, verwendet werden.

Der kurzgeschlossene Strompfad zwischen den Lagen des gewickelten Ringbandes wird so hergestellt, dass er bis zum Schmelzen des Ringbandes bei etwa 600 - 1200°C funktionsfähig bleibt. Die Kontaktierung kann somit erfolgen durch alle gängigen Schweißverfahren oder durch mechanische Verbindungstechniken wie beispielsweise Crimpen. Verbindungstechniken die Temperaturen über 400°C nicht standhalten, wie beispielsweise manche Weichlöt- oder Klebetechniken, sind somit ungeeignet für diese Anwendung.

Der kurgeschlossene Strompfad kann zum Beispiel durch Verschweißen, Punkschweißen, Crimpen, eine mechanischen Verbindung zumindest zweier überlappender Lagen des gewickelten Ringbands hergestellt werden. Der kurzgeschlossene Strompfad kann aber auch durch mehrere oder alle Lagen des gewickelten Ringbands hindurch gehen.

Das gewickelte Ringband weist mehr als eine einzige Wicklung auf, weil es eine Überlappung von zumindest zwei Lagen aufweist, damit ein kurzgeschlossener Strompfad zwischen zumindest zwei aufeinanderliegenden Lagen erzeugt werden kann. In weiteren Ausführungsbeispielen weist das gewickelte Ringband zumindest zwei Wicklungen auf. Der geschlossene Strompfad kann in diesen Ausführungsbeispielen in verschiedene Weisen erzeugt werden.

In einer Durchführungsform stehen zumindest zwei benachbarte Wicklungen miteinander in elektrischem Kontakt.

In einer Durchführungsform werden sämtliche Wicklungen mittels einer gemeinsamen elektrischen Verbindung miteinander kurzgeschlossen. Alternativ können mehrere, jedoch nicht sämtliche Wicklungen mittels einer gemeinsamen elektrischen Verbindung miteinander kurzgeschlossen werden.

Die Erwärmung der Hartlotfolie und der Verbindungsstelle kann unter Vakuum oder einem Schutzgas durchgeführt werden. Ein geeignetes Schutzgas kann ein Inertgas, wie Argon, oder eine wasserstoffhaltige Gasmischung, wie Ar-4%H₂ sein. Ein Vakuum oder ein Schutzgas kann verwendet werden, eine Oxidation der Teile und/oder die Hartlotfolie zu vermeiden.

Die Hartlotfolie und die Verbindungsstelle wird durch die Verwendung eines Induktionslötprozesses lokal erwärmt, wobei eine Induktionsspule um die Verbindungsstelle und den Ringband aus der Hartlotfolie herum angeordnet, und ein Wechselstrom angelegt werden kann, damit die Induktionsspule ein magnetisches Wechselfeld erzeugt. Das magnetische Wechselfeld induziert Wirbelströme im Ringband, die Wärme im Ringband erzeugen. Beim Induktionslöten wird somit berührungslos das magnetische Wechselfeld in das Lötgut eingekoppelt. Der kurzgeschlossene Strompfad des erfindungsgemäßen gewickelten Ringbands hilft dabei das magnetische Wechselfeld in das Hartlot des Ringbands einzukoppeln, so dass es zuverlässig und schnell aufschmilzt. Die Wärmeenergie wird somit direkt im zu erwärmenden Lötgut, d.h. im gewickelten Ringband, erzeugt. Die Induktionsspule kann aber auch innerhalb der zu verbindenden Teile angeordnet sein, da das Magnetfeld auch außerhalb der Induktionsspule wirkt.

Die Anordnung des gewickelten Ringbands an der Verbindungsstelle kann unterschiedlich sein wobei das gewickelte Ringband an die Form der zu hartlötenden Teile angepasst wird. Das gewickelte Ringband braucht nicht kreisförmig im Querschnitt sein. Zum Beispiel kann das Ringband rechteckig, sechskantig, oval oder ungleichförmig sein. Das gewickelte Ringband wird zwischen zwei oder mehreren Teilen angeordnet, beispielsweise zwischen ineinander angeordneten Rohren, um diese miteinander hartzulöten. Das gewickelte Ringband kann auch innerhalb oder außerhalb dieser Teile angeordnet sein, sofern das Ringband mit der Fügestelle in Kontakt steht.

Die Hartlotfolie kann duktil sein, damit sie zuverlässig gewickelt werden kann, um das gewickelte Ringband herzustellen.

Zum Herstellen einer Lötnaht zwischen den zu verbindenden Teilen werden in einer Durchführungsform die Hartlotfolie und die Verbindungsstelle auf eine Temperatur, die oberhalb einer Liquidustemperatur der Hartlotfolie liegt, erwärmt und unter Ausbildung einer Hartlotverbindung bzw. Lötnaht zwischen den Teilen abgekühlt.

Die Hartlotfolie weist eine Liquidustemperatur auf und die Teile eine Schmelztemperatur, die höher ist, als die Liquidustemperatur der Hartlotfolie. Die Teile können jeweils aus einem chromhaltigen Edelstahl, wie einem austenitischen Edelstahl, oder ferritischen Edelstahl, oder einer Ni-Legierung oder einer Co-Legierung bestehen. Die Liquidustemperatur der Hartlotfolie kann zwischen 900°C und 1200°C liegen, wobei die Liquidustemperatur durch den Metalloidgehalt eingestellt werden kann. Die Verarbeitungstemperatur, d.h. die Temperatur auf die, die Hartlotfolie erwärmt wird, kann oberhalb der Liquidustemperatur, beispielsweise 50°C oberhalb der Liquidustemperatur liegen.

In einer weiteren Ausführungsform weist die Hartlotfolie einen Metalloidgehalt von 10 Atomprozent bis 25 Atomprozent auf.

Die Hartlotfolie kann unterschiedliche chemische Zusammensetzungen aufweisen. In einem Ausführungsbeispiel weist die Hartlotfolie zumindest eines Übergangsmetalls Nickel, Kobalt, Eisen oder Kupfer und Gesamtgehalt an Bor und/oder Phosphor und/oder Silizium im Bereich von 10 bis 30 Atom % auf. Die Zusammensetzung wird als Formel so dargestellt:
TM_{Bal} M10-30 Atom %

Den Basiselementen und Metalloiden können zur Verbesserung der technologischen Eigenschaften weitere Übergangsmetalle oder Metalle wie Chrom, Molybdän, Niob, Tantal, Vanadium, Wolfram, Aluminium, Mangan, Zinn, oder Zink in einem Gesamtgehalt von 0 bis 30 Atom % zugesetzt werden.

Ferner kann die Legierung typische Verunreinigungen wie Beispielsweise Kohlenstoff, Schwefel oder Titan bis 2 Atom% aufweisen.

Erfindungsgemäß wird die metalloidhaltige Hartlotfolie in Gestalt eines gewickelten Ringbandes bereitgestellt, welcher durch die gezielte Anbringung kurzgeschlossener Strompfade zwischen den Folienlagen so modifiziert wird, dass er sich in mit Induktionsheizungen signifikant besser erwärmen lässt als andere Darreichungsformen, wie Pulver oder Paste der gleichen Legierungszusammensetzung.

Das gewickelte Ringband kann für Hartlote aus der Legierungsgruppe der Ni, Co oder Fe-Lote verwendet werden, die zur Schmelzpunkterniedrigung der Legierungsmatrix einen gewissen Anteil an Elementen mit stark schmelzpunktabsenkender Wirkung, wie Bor, Phosphor, Silizium und Kohlenstoff auf. Da sich diese Metalloide nur begrenzt in Ni-, Co- oder Fe-Legierungen lösen lassen, scheiden sich während der Kristallbildung bei der Erstarrung der Schmelze spröde intermetallische Verbindungen aus, die dazu führen das die erstarrte Schmelze zu spröde ist, um sich umformen zu lassen.

Aufgrund der inhärenten Sprödigkeit und schlechten Kaltumformbarkeit dieser Si, B, oder P haltigen Lote können Sie nicht mittels klassischer Warm- und Kaltumformschritten zu Folien, Bändern oder Drähten verarbeitet werden, sondern stehen weitestgehend nur in direkt aus der Schmelze hergestellten Halbzeug Formaten zur Verfügung. Diese wären gasverdüste Pulver, und daraus hergestellten Applikationsformen wie Lotpasten, oder Lot Tapes, bei welchen die Metallpulver mit organischen Binde- und Lösungsmitteln vermengt werden. Besitzt eine solche Legierung einen Metalloidgehalt zwischen 10 und 30 Atomprozent besteht die Möglichkeit sie mittels eines Rascherstarrungsverfahren in Form von duktilen, zumindest teilweise amorphen Folien herzustellen.

Die Legierungszusammensetzung der Hochtemperaturlote auf Ni-, Co-oder Fe-Basis kann ferner einen Chromgehalt aufweisen, der ausreichend hoch ist, um die Legierung vor korrosivem oder oxidativem Angriff zu schützen. Beispielsweise weisen die Hartlote auf Ni- Co- oder Fe-Basis mindestens 3 Atomprozent Chrom auf. Aus diesem Grund werden Lötverfahren benötigt die es erlauben unter einer weitestgehend sauerstofffreien Prozessatmosphäre zu arbeiten um (a) die Oxidschicht der Werkstoff zu reduzieren, um ein benetzen und fließen des Lotes zu ermöglichen, und um (b) die verwendeten Werkstoffe vor weiterer Oxidation und Verzunderung während des Wärmeeintrages zu schützen. Aus diesem Grund werden solche Lötungen zumeist als Ofenlötungen unter Schutzgasatmosphäre oder im Vakuum ausgeführt. Andere selektive Erwärmungsverfahren wie das Flammlöten oder das Strahllöten können nicht leicht unter Schutzgasatmosphäre oder im Vakuum durchgeführt werden. Somit sind diese Verfahren zum verarbeiten dieser Hochtemperaturlote ungeeignet.

Aufgrund der Gestalt der Hartlotfolie als gewickeltes Ringband mit einem kurzgeschlossenen Strompfad wird ein Verfahren zum Hartlöten mit Hochtemperaturloten bereitgestellt, mit dem eine zuverlässige Lötnaht aus einem Hochtemperaturlot einer (Ni,Co,Fe)-Cr-(Si,B,P) Legierung durch ein induktives Erwärmungsverfahren hergestellt werden kann. Somit können zu lötende Komponenten, die aufgrund ihrer Größe, Bauform oder Komplexität nicht in einem Ofen gelötet werden können, oder wenn nicht alle Bauteile einer Komponente erhitzt werden dürfen, auch hartgelötet werden.

Manche Kupfer-basierte-Lote weisen zur Schmelzpunkterniedrigung der Legierungsmatrix einen gewissen Anteil an zumindest einem Element, wie Phospohr mit stark schmelzpunktabsenkender Wirkung in Gehalten von mehr als 10 at.% auf. Einige dieser Kupfer-basierten Hartlote können als Draht hergestellt werden. Erfindungsgemäß werden sie auch in Form eines gewickelten Ringbands bereitgestellt, das einen kurzgeschlossenen Strompfad zwischen zwei aufeinanderliegenden Lagen aufweist und induktiv erwärmt, um Teile über einer Hartlotnaht miteinander zu verbinden.

Erfindungsgemäß wird ferner die Verwendung einer amorphen oder teilamorphen Hartlotfolie mit einem Metalloidgehalt von 10 bis 30 Atom% zum Induktionslöten bereitgestellt, wobei die Hartlotfolie die Gestalt eines gewickelten Ringbands aufweist, das einen kurzgeschlossenen Strompfad zwischen zwei aufeinanderliegenden Lagen aufweist.

In einer Durchführungsform wird eine Hartlotfolie auf Ni- Fe- oder Co-Basis bei einem Induktionslötprozess verwendet. In einer Durchsführungsform weist die Hartlotfolie auf Ni- Fe- oder Co-Basis einen Chromgehalt von mindestens 3 Atom% auf. Dieser Induktionslötprozess kann auch unter Vakuum oder einem Schutzgas durchgeführt werden, um Oxidation der Hartlotfolie zu vermeiden.

In einer Durchführungsform wird eine Hartlotfolie auf KupferBasis bei einem Induktionslötprozess verwendet.

Teile eines Wärmetauschers oder einer Abgasanlage oder eines metallischen Partikelfilters oder Katalysators oder einer Kraftstoffleitung können unter Verwendung eines Induktionslötprozesses hartgelötet werden, wobei die Hartlotfolie an einer Verbindungsstelle der Teile eines Wärmetauschers, eines metallischen Katalysators, oder einer Abgasanlage oder eines metallischen Partikelfilters oder einer Kraftstoffleitung angeordnet wird, und die Teile unter Verwendung eines Induktionslötprozesses hartgelötet werden.

Eine Applikationsform einer metalloidhaltigen Lotlegierung ist somit bereitgestellt, mit der sich diese Legierungen in Induktionsfeldern erwärmen lassen und sind somit für Induktionslötungen geeignet sind. Die erfindungsgemäße Applikationsform von einem gewickelten Ringband mit einem kurzgeschlossenen Strompfad zwischen zwei aufeinanderliegenden Lagen des Ringbands weist verschiedene technologische, wirtschaftliche und arbeitsplatzmedizinische Vorteile gegenüber anderen Applikationsformen auf.

Um korrosionsbeständige Hochtemperaturlotverbindungen mit einem Induktionslötverfahren herzustellen, ist es wünschenswert, dass sich auch chromhaltige Lotwerkstoffe mit dieser Fügetechnik verarbeiten lassen. Anwendungen für solche Induktionslötungen sind beispielsweise Fügeverbindungen an Kraftstoffleitungen und Abgasanlagen im Automobilbereich, an Rohrleitungen der chemischen Industrie oder Fügestellen im Heißgasbereich von Strahltriebwerken, wobei in der Regel mindestens einer der Fügepartner ein rohrförmiges, dünnwandiges Bauteil darstellt. Dazu sollten chromhaltige Hartlote, wie sie Beispielsweise in der Gruppe der Nickelhartlote in DIN EN ISO 17672 beschrieben sind, induktiv erhitzt werden.

Für Induktionslötungen werden in der industriellen Praxis hauptsächlich chromfreie Kupfer- oder Silberlote aus konventionell hergestellten kristallinen Werkstoffen in Form von Drahtringen oder Drahtabschnitten am Lötspalt, oder als Band oder Formteil im Lötspalt appliziert. Der Lötprozess findet, ggf. unter Zugabe von geeigneten Flussmittel, bei Temperaturen von 600°C bis 1000°C statt. Die Prozessdauer beträgt hierbei typischerweise wenige Minuten, wobei die Löttemperatur nach etwa 10 bis 60 Sekunden erreicht wird. Auch Lotpasten dieser chromfreien Cu- oder Ag-Legierungen lassen sich für induktiv erhitze Lötaufgaben verwenden. Die sind aber mit längeren Prozesszeiten als bei vergleichbaren Festloten verbunden, da sich Lotpulver nicht durch das Induktionsfeld allein erhitzen lassen, sondern nur über Strahlung aus dem induktiv erwärmten Grundwerkstoff zum Schmelzen gebracht werden. Eine unerwünschte Überhitzung des Grundwerkstoffes von zum Teil mehreren hundert Grad Celsius ist hierbei die Regel. Aus diesem Grund können pulverbasierte Lotwerkstoffe für Induktionslötungen eingesetzt werden, wenn die Schmelztemperatur des Lotes wesentlich unter der Temperatur liegt bei der die Kornvergröberung des Grundwerkstoffes beginnt.

Das Silberlote Ag 156 (DIN EN ISO 17627) hat einen Schmelzpunkt von 660°C und kann somit zum Induktionslöten von Edelstählen verwendet werden, bei denen die Kornvergröberung bei typischerweise 1050°C beginnt. Verwendet man ein niedrigschmelzendes chromhaltiges Nickellot, wie Beispielsweise Ni 620 mit einer Liquidustemperatur von 1025°C, so kann der Grundwerkstoff durch Überhitzung so massiv geschädigt werden, dass die technologischen Eigenschaften dadurch reduziert sind, und eine bestimmungsgemäße Verwendung des Bauteils nicht mehr möglich ist.

Im Gegensatz zu der Meinung, dass chromhaltige Nickel-basierte Hartlote nicht zum Induktionslöten geeignet sind, wird erfindungsgemäß festgestellt, dass diese chromhaltigen Nickelbasierten Legierungen beim Induktionslöten verwendet werden können, wenn sie die Form eines gewickelten Ringbands mit einem kurzgeschlossenen Strompfad aufweisen.

Es wird festgestellt, dass sich nicht jede Ausgangsform dieser chromhaltigen Lotwerkstoffe induktiv erwärmen lässt. Chromhaltige Hartlote in Form von Pulver und Pasten lassen sich nicht ausreichend oder gar nicht erwärmen. In der erfindungsgemäßen Konfiguration lassen sich jedoch chromhaltige Hartlotfolien erwärmen. Eine mögliche Begründung dieser Beobachtung besteht darin, dass die Strukturgröße der Lotpulverpartikel von 50 bis 150 µm zu klein ist, um bei den mittel- und hochfrequenten Wechselfeldern der Induktionserwärmungsanlagen einen Skin-Effekt zu erzeugen. Ferner wird beobachtet, dass die untersuchten Lotpulver eine schlechte elektrische Leitfähigkeit aufweisen.

In einer Ausführungsform wird ein Lotformteil aus einem chromhaltigen Lötmaterial bereitgestellt, welches sich in mittel- und hochfrequenten Induktionsfeldern schnell erwärmen lässt.

Für das Hart- und Hochtemperaturlöten von Stählen, Edelstählen, sowie Ni- und Co-Legierungen werden vor allem Ag-, Cu-, Co- und Ni-Basis-Lote eingesetzt, wie sie z.B. in DIN EN ISO 17672 Hartlöten-Lote beschrieben sind. Sofern das gefügte Bauteil einer hohen Korrosionsbelastung ausgesetzt wird, eignen sich nur noch chromhaltige Hartlotlegierungen, wie sie in der Gruppe der Nickel und Kobaltlote dieser Norm zu finden sind. Weiterhin eignen sich auch chromhaltige Nickel- und Eisenlote wie sie beispielhaft in US 8,052,809 B2 oder US 7,392,930 B2 beschrieben sind. Derartige Lotlegierungen enthalten einen gewissen chromgehalt zur Verbesserung der Korrosionsbeständigkeit, sowie die aus den Gruppen der Nicht- oder Halbmetalle stammenden Elemente Silizium, Bor und Phosphor zur Absenkung der Schmelztemperatur. Die Verarbeitungstemperaturen dieser Lotwerkstoffe liegen typischerweise bei etwa 1000°C bis 1200°C. Aufgrund der inhärenten Sprödigkeit und schlechteren Kaltumformbarkeit dieser Si, B, oder P haltigen Lote können sie nicht mittels klassischer Warm- und Kaltumformschritten zu Folien, Bändern oder Drähten verarbeitet werden, sondern stehen weitestgehend nur in direkt aus der Schmelze hergestellten Halbzeugformaten zur Verfügung. Diese wären gasverdüste Pulver, und daraus hergestellte Applikationsformen wie Lotpasten, oder Lot Tapes, bei welchen die Metallpulver mit organischen Binde- und Lösungsmitteln vermengt werden. Neben den Pulverbasierten Produkten sind manche dieser Lotlegierungen auch mit dem Verfahren der Rascherstarrung als homogene, duktile, wenigstens teilamorphe Hartlotfolien in Dicken von etwa 15-75 pm herstellbar.

Für das Löten von chromhaltigen Lotwerkstoffen sind Lötverfahren geeignet, die es erlauben unter einer weitestgehend sauerstofffreien Prozessatmosphäre zu arbeiten um die Chromoxidschicht der Werkstoff zu reduzieren, um ein benetzen und fließen des Lotes zu ermöglichen, und um die verwendeten Werkstoffe vor weiterer Oxidation und Verzunderung während des Wärmeeintrages zu schützen.

Aus diesem Grund werden solche Lötungen zumeist als Ofenlötungen unter Schutzgasatmosphäre oder im Vakuum ausgeführt. Einige selektive Erwärmungsverfahren wie das Flammlöten oder das Strahllöten lassen sich nicht einfach unter Schutzgasatmosphäre oder im Vakuum ablaufen und sind weniger geeignet.

Ein selektives Erwärmungsverfahren, welches sich mit einer hochwirksamen Schutzbegasung kombinieren lässt, ist die induktive Erwärmung. Beim Induktionslöten wird ein Lötgut mittels berührungsloser Einkopplung eines magnetischen Wechselfeldes lokal erwärmt. Die Wärmeenergie wird direkt im zu erwärmenden Lötgut erzeugt. Die dazu benutzten Vorrichtungen sind die Induktionsheizungen. Sie erzeugen mittels einer mit niederfrequentem- (1-70 kHz) mittelfrequentem- (70-500 kHz) oder hochfrequentem (0,5-1,5 MHz) Wechselstrom durchflossenen Spuledem Induktor- ein magnetisches Wechselfeld, das im Lötgut eine elektrische Spannung induziert. Die induzierte Spannung führt dazu, dass in dem Lötgut ein Strom fließt, der Wirbelstrom, welcher gemäß des Joule'schen Gesetzes zu einer Erwärmung des Bauteils führt.

Bei mittel- und hochfrequenten Wechselspannungen führt das Auftreten des Skin-Effektes dazu, dass diese Wirbelströme an oberflächennahen Werkstückbereichen verdrängt werden. Je höher die Frequenz, desto stärker ist dieser Effekt. Da die Bauteile bei Lötprozessen nur oberflächennah erwärmt werden müssen, sind mittel- und hochfrequente Induktionsheizungen besonders gut für Lötaufgaben geeignet.

Neben dem Effekt der Erwärmung über die Wirbelstromverluste, kann in ferromagnetischen Materialien noch zusätzlich eine Erwärmung über die im magnetischen Wechselfeld entstehenden Ummagnetisierungsverluste stattfinden. Dieser Effekt führt jedoch nur bis zum Erreichen der Curie-Temperatur, zum Beispiel liegt die Curie-Temperatur T_{c} für Stahl bei 650-750°C, zu einer Erwärmung des Bauteils. Soll das Bauteil bei höheren Temperaturen verlötet werden, wird es materialseitig und konstruktiv so ausgelegt, dass der induzierte Strom möglichst hohe Wirbelstromverluste erzeugen kann, um einen hohen Wirkungsgrad zu erzielen.

Die Wärmeleistung ist bei Induktionslötprozessen gut steuerbar und reproduzierbar. Anders als bei Ofenlötprozessen ist es nicht notwendig das komplette Bauteil auf Fügetemperatur zu bringen. Durch Anpassung der Induktor-Geometrie an das Bauteil ist es möglich, ausschließlich kleine Lötnahtbereiche zu erwärmen, ohne dabei den Rest des Bauteils thermisch zu belasten. Aufgrund der hohen Leistung können sehr kurze Aufheizzeiten der Lötstellen, zum Beispiel von wenigen Sekunden, realisiert werden. Die hohe Leistungsdichte des Verfahrens, gepaart mit den daraus resultierenden extrem kurzen Prozesszeiten, machen es zu einem der wirtschaftlichsten, industriell nutzbaren Lötverfahren.

Die sehr kurze Prozesszeit führt ferner dazu, dass thermisch sensible Grundwerkstoffe, bei denen ein längerer Wärmeeintrag zu einer Änderungen der Mikrostruktur führen kann, verlötet werden können, ohne dass eine Verschlechterung der technologischen Eigenschaften befürchtet werden muss. Dies ist insbesondere beim Hochtemperarturlöten von Stählen oder Nickelbasiswerkstoffen von Vorteil.

Da das Induktionsfeld einen keramischen Nichtleiter ohne Leistungsverlust durchdringt, ist es möglich auch Bauteile, die sich im Inneren eines keramischen Schutzrohres befinden, zu erwärmen. Dies ist insbesondere beim Hart- oder Hochtemperaturlöten von Vorteil, wenn man um die Fügestelle eine sauerstofffreie Prozessatmosphäre, wie unter Vakuum, oder einem Schutzgas, bereitgestellt wird, um eine Oxidierung und Verzunderung der Werkstoffe während des Wärmeeintrages zu verhindern. Induktionslötprozesse sind ferner gut automatisierbar und lassen sich gut in industrielle Fertigungsabläufe integrieren.

Ausführungsbeispiele werden nun anhand der Zeichnungen und Beispiele näher erläutert.
Figur 1a zeigt eine Draufsicht eines Lotformteils zum Induktionslöten.
Figur 1b zeigt eine perspektivische Ansicht des Lotformteils.
Figur 2a zeigt eine Draufsicht eines Aufbaus zum Induktionslöten.
Figur 2b zeigt eine Schnittansicht des Aufbaus zum Induktionslöten.

Tabelle 1 zeigt die Zusammensetzung der untersuchten Stähle.
Tabelle 2 zeigt die Zusammensetzung der untersuchten Metallpulver.
Tabelle 3 zeigt die Zusammensetzung der untersuchten amorphen Folien.
Tabelle 4 zeigt Versuchsergebnisse.

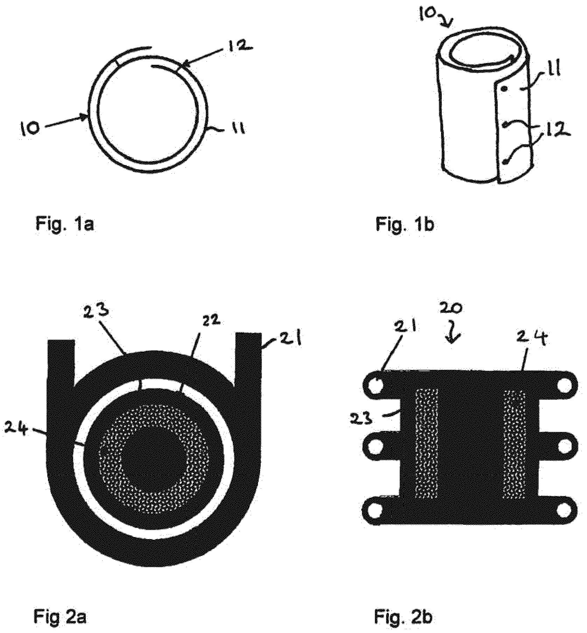

Figur 1a zeigt eine Draufsicht und Figur 1b eine perspektivische Ansicht eines Lotformteils 10 zum Induktionslöten. Das Lotformteil 10 hat die Gestalt eines gewickelten Ringbands und weist eine mehrlagig gewickelte Hartlotfolie 11 auf, das an mindestens einer Stelle 12 eine elektrische Kontaktierung durch die Lagen hindurch aufweist. Die Hartlotfolie 11 weist einen Metalloidgehalt von 10 bis 30 Atom% und ist zumindest teilweise amorph. Die elektrische Kontaktierung 12 kann durch Verschweißen, Punkverschweißen oder einer mechanischen Verbindung bereitgestellt werden. Somit weist das Lotformteil 10 einen kurzgeschlossenen Strompfad zwischen zwei aufeinanderliegenden Lagen auf.

Das gewickelte Ringband, das in Figur 1 dargestellt ist, weist zwei Wicklungen auf. Das gewickelte Ringband kann jedoch mehr als zwei Wicklungen oder weniger als zwei Vollwicklungen aufweisen. Zumindest zwei Enden einer Hartlotfolie sollten überlappen, damit ein kurzgeschlossener Strompfad zwischen zwei aufeinanderliegenden Lagen erzeugt werden kann. Die Lagen können in direktem mechanischen Kontakt stehen. Sie können aber auch voneinander beabstandet und durch eine dazwischen angeordnete elektrische Verbindung miteinander kurzgeschlossen werden.

Das Lotfolienformteil 10, wie in Figur 1 dargestellt, ist für Induktionslöten geeignet und kann aus einer Nickel-, Eisen-, Kobalt-, oder Kupferlegierung deren Zusammensetzung Silizium und/oder Bor und/oder Phosphor in einem Gesamtgehalt von 10 Atom% bis 30 Atom% bestehen, wobei die Lotlegierung als amorphes, oder wenigstens teilamorphes Band vorliegt, welches zu einem mehrlagigen Ringbandkern aufgewickelt wird. Eine Nickel-, Eisen- oder Kobaltlegierung kann ferner Chrom aufweisen, beispielsweise mindesten 3 Atomprozent Chrom, um die Korrosionsbeständigkeit des Hartlots bzw. der Lötnaht zu verbessern.

Zur Ausbildung der erforderlichen Wirbelströme beim Induktionslöten haben die zwei Lagen untereinander elektrischen Kontakt. Da die Folienlagen beispielsweise durch elektrisch nicht leitende Schichten, wie Siliziumoxid oder Aluminiumoxid, zueinander isoliert sein können, wird dieser elektrische Kontakt durch geeignete Maßnahmen an mindestens einer Stelle sichergestellt. Beispielsweise kann die Oxidschicht an einer Stelle entfernt werden und diese freigelegten Stellen zumindest zwei Lagen miteinander elektrisch verbunden werden.

Die Hartlotfolie wird um eine Verbindungsstelle zwischen zwei oder mehreren Teilen herum angeordnet. Die Hartlotfolie kann aufgewickelt werden und den kurzgeschlossenen Strompfad durch eine elektrische Verbindung zwischen zwei aufeinanderliegenden Lagen der Hartlotfolie erzeugt werden.

Das gewickelte Ringband kann dabei als einzelnes Bauteil gefertigt werden, wie in Figur 1 dargestellt, und danach um die zu verbindenden Teile herum angeordnet werden. Alternativ kann die Hartlotfolie auf eine der zu lötenden Komponenten aufgewickelt und danach die elektrische Kontaktierung zwischen zwei Lagen hergestellt werden, um den kurzgeschlossenen Strompfad zu erzeugen.

Die Außendurchmesser solcher Ringbänder liegen typischerweise zwischen 30 und 500 mm. Die Ringhöhe, beziehungsweise die Breite der verwendeten Lotfolien beträgt typischerweise 1mm bis 20 mm.

Die Hartlotfolie und die Verbindungsstelle werden erwärmt, das Hartlot des gewickelten Ringbands wird aufgeschmolzen, die Teile sowie das Hartlot abgekühlt unter Erzeugen einer hartgelöteten Verbindung der Teile. Das Erwärmen wird mit einem Induktionslötprozess durchgeführt.

Figur 2a zeigt eine Draufsicht und Figur 2b einen Querschnitt eines Aufbaus einer Induktionserwärmungsanlage 20. Die Induktionserwärmungsanlage 20 ist zum Beispiel von der Marke Linn Elektronik HTG-1000, die eine maximale Ausgangsleistung von 1,3 KW aufweist. Diese Induktionserwärmungsanlage 20 wird bei einer Arbeitsfrequenz von etwa 300 kHz verwendet. Für die nachfolgenden beschriebenen Versuche wird die Anlage mit 90% Ausgangsleistung betrieben.

Die Induktionsspule 21 weist einen Innendurchmesser von 32 mm und eine Höhe von 40 mm auf. In diese Spule wurde ein keramischer Spulentopf 22 aus Bornitrid eingebracht (Da 29 mm, h 35 mm), der einen ringförmigen Einstich 23 (Da 25 mm, Di 21mm, h 15 mm) zur Aufnahme von Lotmaterial 24 aufweist. Das Lotmaterial 24 wurde mittig und zentrisch zur Induktorspule ausgerichtet und ohne Zugabe eines weiteren Werkstoffs isoliert aufgeheizt
Versuche an verschiedenen chromhaltigen Hartlotmaterialien werden durchgeführt, um deren Aufschmelzverhalten im Induktionsfeld zu untersuchen. Chromhaltige Hartlotmaterialien sind für manche Anwendungen von Vorteil, da sie die Korrosionsbeständigkeit der Lötnaht verbessern können.

In den Tabellen 1 bis 3 werden die untersuchten Materialien näher beschrieben, wobei hier in Grundwerkstoffe/Stähle, Lotpulver und Lotfolien unterschieden wird.

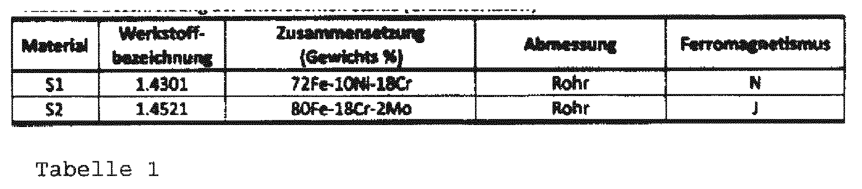

Tabelle 1 zeigt die Zusammensetzung und Form des untersuchten Grundwerkstoffs der zu verbindenden Teile. Rohrförmige Teile aus der Stähle 1.4301 und 1.4521 werden untersucht.

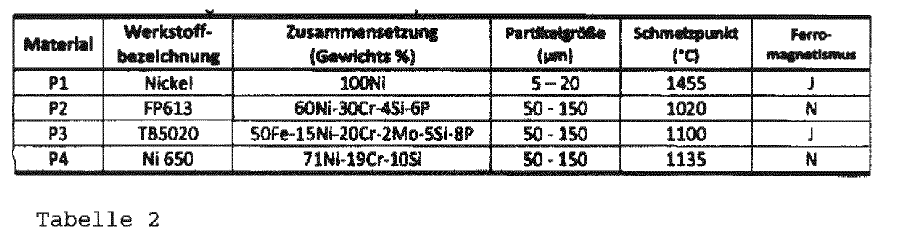

In einer ersten Versuchsreihe werden Hartlote in Pulverform untersucht, um festzustellen, ob chromhaltige Hartlote in Pulverform mit einem Induktionsprozess aufgeschmolzen werden können und somit für Induktionslöten geeignet sind. Tabelle 2 zeigt die Zusammensetzung der untersuchten Pulver. Nickel, FP613, TB5020 und Ni650 werden untersucht.

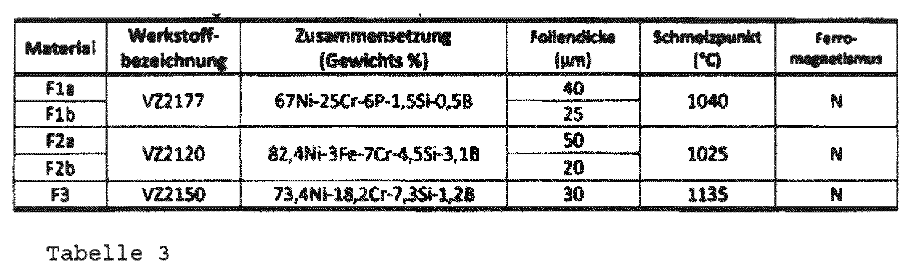

In einer weiteren Versuchsreihe werden Hartlote in Form von zumindest teilweise amorphen duktilen Folien untersucht, um festzustellen, ob chromhaltige Hartlotfolien mit einem Induktionsprozess aufgeschmolzen werden können und somit für Induktionslöten geeignet sind. Tabelle 3 zeigt die Zusammensetzung der untersuchten amorphen Hartlotfolien. Die Hartlotfolien VZ2177, VZ2120 und VZ2150 der Firma Vacuumschmelze GmbH & Co. KG werden untersucht.

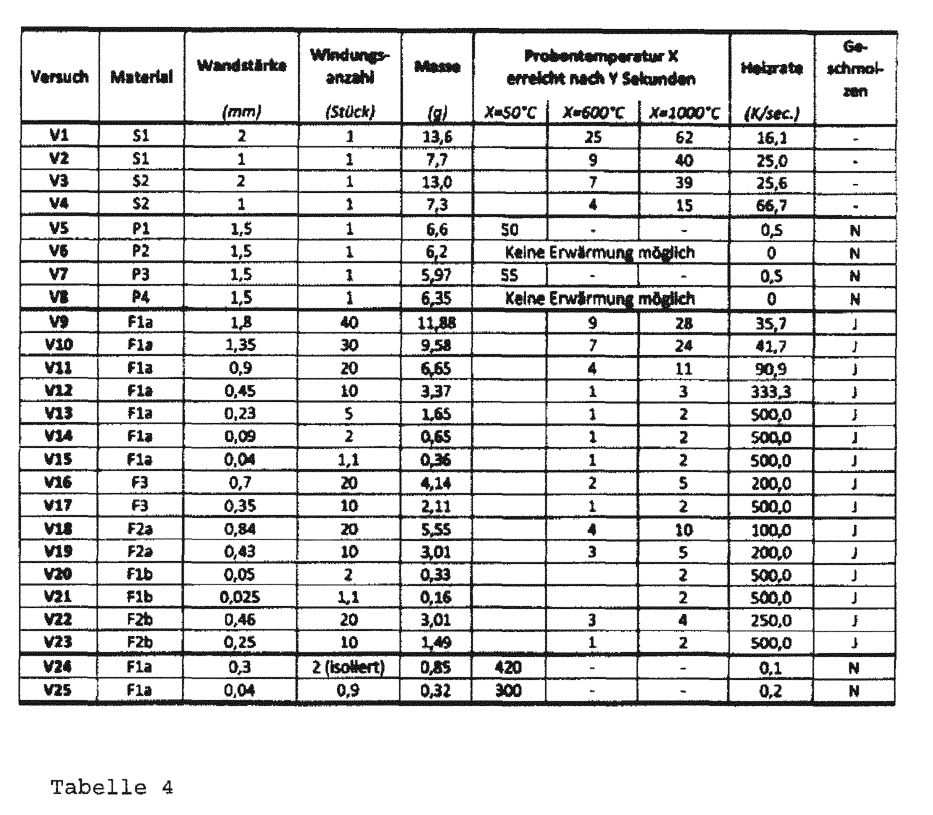

Die Ergebnisse aus den Versuchen sind in Tabelle 4 zusammengefasst. Hartlotmaterialien in Gestalt eines gewickelten Ringbands aus einer Hartlotfolie mit einer Höhe von 13 mm und einem Außendurchmesser von 24,5 mm bei variabler Windungsanzahl werden bereitgestellt. Gemessen wird die Dauer bis zum Erreichen verschiedener Temperaturen bei einer Induktorleistung von 90%. Aus dieser gemessenen Dauer wird die Heizrate berechnet.

Zunächst wird ermittelt, wie schnell sich austenitische- und ferritische Chromstähle in der vorhandenen Induktionsheizung erwärmen ließen. Hierzu wurden Rohrabschnitte mit 1mm und 2 mm Wandstärke aus den Stahlwerkstoffen 1.4301 und 1.4521 bis 1000°C erwärmt, siehe V1 bis V4 der Tabelle 1. Je nach Werkstoff und Masse, bzw. Wandstärke werden Heizraten von 16 bis 66 K/min gemessen.

Wünschenswert ist es, dass das Hartlot sich mit vergleichbaren, oder höheren Heizraten bis zum Schmelzpunkt erwärmen lässt, um die thermische Belastung der Grundwerkstoffe gering und den Lötvorgang kurz zu halten.

Die Versuche V5 bis V8 beschreiben die Untersuchungen mit verschiedenen Hartlotpulvern und Nickelpulver und zeigen, dass selbst bei einer Versuchsdauer von 500 Sekunden keine signifikante Erwärmung des Lotwerkstoffes erreicht wird. Ein Schmelzen des Pulvers kann in keines der Fälle erreicht werden.

Die Versuche V9 bis V25 wurden mit amorphen Hartlotfolien in der Folienbreite 13 mm durchgeführt. Sofern das Band zu einem geschlossenen Ring gewickelt wurde, welcher elektrischen Kontakt zwischen den Bandlagen hatte, siehe die Versuche V9 bis V23 der Tabelle 4, zeigen die verwendeten Lotfolienformteile eine sehr gutes Heizverhalten im Induktionsfeld, und können aufgeschmolzen werden. Überraschenderweise zeigten Lotfolienformteile etwa 35% höhere Heizraten als die untersuchten Stähle bei vergleichbaren Abmessung und Massen. Siehe hierzu Versuch V9 im Vergleich zu den Versuchen V1 und V3 und Versuch V11 im Vergleich zu den Versuchen V2 und V4. Heizraten bis zu 500 K/s werden gemessen.

Ein Vergleich der Versuche V21 und V25 zeigt die Funktionsweise des Lotfolienformteils, das durch mindestens eine volle, elektrisch verbundene Windung erreicht wird. Eine nicht geschlossene Ringform lässt sich, wie Versuch 25 zeigt, nicht aufschmelzen. In Versuch 24 sind die Lagen des gewickelten Ringbands voneinander elektrisch isoliert. Versuch 24 zeigt, dass auch bei mehrlagigen Ausführungen die Lagen untereinander eklektisch kontaktiert werden sollten, um die Hartlotfolie aufschmelzen zu können. Ohne elektrische Kontaktierung der Bandlagen untereinander findet keine nennenswerte Erwärmung des Lotfolienformteils statt, so dass dieses Ringband nicht für Induktionslöten geeignet ist.

## Patentansprüche

1. Verfahren zum Hartlöten, **gekennzeichnet durch** folgende Schritte:
Anordnen einer amorphen oder teilamorphen Hartlotfolie (11) mit einer Zusammensetzung, die einen Metalloidgehalt von 10 bis 30 Atom% aufweist, in Gestalt eines gewickelten Ringbands (10), welches an die Form der zu hartlötenden Teile angepasst ist, an einer Verbindungsstelle zweier oder mehrerer Teile, wobei das gewickelte Ringband (10) einen kurzgeschlossenen Strompfad (12) zwischen mindestens zwei aufeinanderliegenden Lagen aufweist,
induktives Erwärmen der Hartlotfolie (11),
Schmelzen der Hartlotfolie (11), und
Erzeugen einer hartgelöteten Verbindung der Teile.

2. Verfahren nach Anspruch 1,
**dadurch gekennzeichnet, dass**
zunächst die Hartlotfolie (11) um die Verbindungsstelle herum gewickelt und danach ein kurzgeschlossener Strompfad (12) zwischen zumindest zwei aufeinanderliegende Lagen der Hartlotfolie (11) erzeugt wird, oder
zunächst ein gewickeltes Ringband (10) mit einem kurzgeschlossenen Strompfad (12) zwischen zwei aufeinanderliegenden Lagen der Hartlotfolie (11) hergestellt wird, um ein gewickeltes Ringband (10) als Hartlotformteil herzustellen, und danach das Hartlotformteil um die Verbindungsstelle herum angeordnet wird, oder
ein vorgefertigtes gewickeltes Ringband (10) mit einem kurzgeschlossenen Strompfad (12) zwischen zwei aufeinanderliegenden Lagen der Hartlotfolie (11) bereitgestellt wird und das vorgefertigte Ringband (10) an der Verbindungstelle angeordnet wird.

3. Verfahren nach Anspruch 1 oder Anspruch 2,
**dadurch gekennzeichnet, dass**
der kurzgeschlossene Strompfad (12) durch Verschweißen, Punktschweißen, Crimpen, oder eine mechanische Verbindung zumindest zweier überlappender Lagen des gewickelten Ringbands (10) hergestellt wird.

4. Verfahren nach einem der vorhergehenden Ansprüche,
**dadurch gekennzeichnet, dass**
das gewickelte Ringband (10) zumindest zwei Wicklungen aufweist.

5. Verfahren nach Anspruch 4,
**dadurch gekennzeichnet, dass**
zumindest zwei benachbarte Wicklungen miteinander in elektrischem Kontakt stehen.

6. Verfahren nach Anspruch 4 oder Anspruch 5, **dadurch gekennzeichnet, dass**
sämtliche Wicklungen mittels einer gemeinsamen elektrischen Verbindung miteinander kurzgeschlossen werden, oder mehrere Wicklungen mittels einer gemeinsamen elektrischen Verbindung miteinander kurzgeschlossen werden.

7. Verfahren nach einem der vorhergehenden Ansprüche,
**dadurch gekennzeichnet, dass**
zumindest die Hartlotfolie (11) und die Verbindungsstelle unter Vakuum oder einem Schutzgas erwärmt werden.

8. Verfahren nach einem der vorhergehenden Ansprüche,
**dadurch gekennzeichnet, dass**
die Hartlotfolie (12) und die Verbindungsstelle lokal erwärmt werden.

9. Verfahren nach einem der Ansprüche 1 bis 8,
**dadurch gekennzeichnet, dass**
eine Induktionsspule um die Verbindungsstelle herum angeordnet wird.

10. Verfahren nach Anspruch 9,
**dadurch gekennzeichnet, dass**
die Teile unter Verwendung eines Induktionslötprozesses hartgelötet werden.

11. Verfahren nach einem der vorhergehenden Ansprüche,
**dadurch gekennzeichnet, dass**
als Hartlotfolie (11) eine auf Eisen oder Nickel oder Kobalt basierende Hartlotfolie bereitgestellt wird.

12. Verfahren nach Anspruch 11,
**dadurch gekennzeichnet, dass**
als Hartlotfolie (11) eine Hartlotfolie mit zumindest 3 Atom% Chrom bereitgestellt wird.

13. Verfahren nach einem der Ansprüche 1 bis 11,
**dadurch gekennzeichnet, dass**
als duktile Hartlotfolie (11) eine chromfreie Hartlotfolie bereitgestellt wird.

14. Verfahren nach einem der Ansprüche 1 bis 10,
**dadurch gekennzeichnet, dass**
als Hartlotfolie (11) eine auf Kupfer basierende Hartlotfolie bereitgestellt wird.

15. Verwendung einer Hartlotfolie zum Induktionslöten,
**dadurch gekennzeichnet, dass**
die Hartlotfolie (11) eine amorphe oder teilamorphe Hartlotfolie mit einem Metalloidgehalt von 10 bis 30 Atom% und
die Gestalt eines gewickelten Ringbands (10) aufweist, welches an die Form der zu hartlötenden Teile angepasst ist und an einer Verbindungsstelle zweier oder mehrerer Teile angeordnet wird, wobei das gewickelte Ringband (10) einen kurzgeschlossenen Strompfad (12) zwischen zwei aufeinanderliegenden Lagen aufweist.

16. Verwendung nach Anspruch 15,
**dadurch gekennzeichnet, dass**
die Hartlotfolie (11) ein Hartlot auf Eisen- oder Nickel- oder Kobaltbasis aufweist.

17. Verwendung nach Anspruch 16,
**dadurch gekennzeichnet, dass**
die Hartlotfolie (11) einen Chromgehalt von mindestens 3 Atom% aufweist.

18. Verwendung nach Anspruch 15, **dadurch gekennzeichnet, dass** die Hartlotfolie (11) ein Hartlot auf Kupferbasis aufweist.

19. Verwendung nach einem der Ansprüche 15 bis 18,
**dadurch gekennzeichnet, dass**
die Hartlotfolie (11) an einer Verbindungsstelle von Teilen eines Wärmetauschers, eines metallischen Katalysators oder einer Abgasanlage oder eines metallischen Partikelfilters oder einer Kraftstoffleitung angeordnet wird, und die Teile unter Verwendung eines Induktionslötprozesses hartgelötet werden.

## Claims

1. Method of hard-soldering, **characterised by** the following steps:
arrangement of an amorphous or partly amorphous brazing foil (11), with a composition which has a metalloid content of 10 to 30 atom%, in the form of a wound annular band (10) which is matched to the shape of the parts to be hard-soldered, on a joint between two or
more parts, wherein the wound annular band (10) has a short-circuited current path (12) between at least two layers lying on top of each other, inductive heating of the brazing foil (11), melting of the brazing foil (11), and creation of a hard-soldered joining of the parts.

2. Method according to claim 1,
**characterised in that**
firstly the brazing foil (11) is wound around the joint and then a short-circuited current path (12) is created between at least two layers lying on top of each other, or
firstly a wound annular band (10) with a short-circuited current path (12) is made between two layers of the brazing foil (11) lying on top of each other, in order to produce a wound annular band (10) as hard-soldered part, and then the hard-soldered part is arranged around the joint, or
a pre-fabricated wound annular band (10) with a short-circuited current path (12) is provided between two layers lying on top of each other, and the wound annular band (10) is arranged on the joint.

3. Method according to claim 1 or claim 2,
**characterised in that**
the short-circuited current path (12) is created by welding, spot welding, crimping or a mechanical connection of at least two overlapping layers of the wound annular band (10).

4. Method according to any of the preceding claims,
**characterised in that**
the wound annular band (10) has at least two windings.

5. Method according to claim 4,
**characterised in that**
at least two adjacent windings are in electrical contact with one another.

6. Method according to claim 4 or claim 5
**characterised in that**
all windings are short-circuited to one another by means of a common electrical connection, or several windings are short-circuited to one another by means of a common electrical connection.

7. Method according to any of the preceding claims,
**characterised in that**
at least the brazing foil (11) and the joint are heated under vacuum or a protective gas.

8. Method according to any of the preceding claims,
**characterised in that**
the brazing foil (11) and the joint are heated locally.

9. Method according to any of claims 1 to 8,
**characterised in that**
an induction coil is arranged around the joint.

10. Method according to claim 9,
**characterised in that**
the parts are hard-soldered using an induction soldering process.

11. Method according to any of the preceding claims,
**characterised in that**
a brazing foil based on iron or nickel or cobalt is provided as brazing foil (11).

12. Method according to claim 11,
**characterised in that**
a brazing foil with at least 3 atom% chromium is provided as brazing foil (11).

13. Method according to any of claims 1 to 11,
**characterised in that**
a chromium-free brazing foil is provided as ductile brazing foil (11).

14. Method according to any claims 1 to 10,
**characterised in that**
a brazing foil based on copper is provided as brazing foil (11).

15. Use of a brazing foil for induction soldering ,
**characterised in that**
the brazing foil (11) is an amorphous or partly amorphous brazing foil (11) with a metalloid content of 10 to 30 atom% and having the form of a wound annular band (10) which is matched to the shape of the parts to be hard-soldered, and is arranged on a joint between two or more parts, wherein the wound annular band (10) has a short-circuited current path (12) between two layers lying on top of each other.

16. Use according to claim 15,
**characterised in that**
the brazing foil (11) has a hard solder based on iron or nickel or cobalt.

17. Use according to claim 16,
**characterised in that**
the brazing foil (11) has a chromium content of at least 3 atom%.

18. Use according to claim 15, **characterised in that** the brazing foil (11) has a hard-solder based on copper.

19. Use according to any of claims 15 to 18,
**characterised in that**
the brazing foil (11) is arranged on a joint of parts of a heat exchanger, a metallic catalyst or an exhaust system or a metallic particle filter or a fuel line, and the parts are hard-soldered using an induction soldering process.

## Revendications

1. Procédé de brasage fort, **caractérisé par** les étapes suivantes consistant à :
placer une feuille de brasure fort amorphe ou semi-amorphe (11) ayant une composition qui présente une teneur en metalloïde comprise entre 10 et 30 % en pourcentage atomique, sous la forme d'une bande annulaire enroulée (10) laquelle est adaptée à la forme des pièces à braser, à un point d'assemblage d'au moins deux pièces, la bande annulaire enroulée (10) présentant un trajet de courant (12) en court-circuit entre au moins deux couches superposées, procéder au chauffage inductif de la feuille de brasure dur (11),
faire fondre la feuille de brasure fort (11), et
produire un assemblage par brasage fort des pièces.

2. Procédé selon la revendication 1, **caractérisé en ce que**
d'abord la feuille de brasure fort (11) entoure le point d'assemblage et ensuite un trajet de courant (12) est généré entre au moins deux couches superposées de la feuille de brasure fort (11), ou
une bande annulaire (10) enroulée fabriquée à l'avance est produite entre deux couches superposées de la feuille de brasure fort (11) et la bande annulaire (10) fabriquée à l'avance est disposée sur le point d'assemblage.

3. Procédé selon la revendication 1 ou la revendication 2, **caractérisé en ce que** le trajet de courant (12) en court-circuit est fabriqué par soudage, par soudage par points, par sertissage ou par liaison mécanique entre au moins deux couches se chevauchant de la bande annulaire enroulée (10).

4. Procédé selon l'une quelconque des revendications précédentes, **caractérisé en ce que** la bande annulaire (10) enroulée présente au moins deux enroulements.

5. Procédé selon la revendication 4, **caractérisé en ce qu'**au moins deux enroulements adjacents sont en contact électrique l'un avec l'autre.

6. Procédé selon la revendication 4 ou la revendication 5, **caractérisé en ce que** des enroulements complets sont court-circuités les uns avec les autres au moyen d'un raccordement électrique commun, ou plusieurs enroulements sont court-circuités les uns avec les autres au moyen d'un raccordement commun.

7. Procédé selon l'une quelconque des revendications précédentes, **caractérisé en ce qu'**au moins la feuille de brasure fort (11) et le point d'assemblage sont chauffés sous vide ou sous l'influence d'un gaz de protection.

8. Procédé selon l'une quelconque des revendications précédentes, **caractérisé en ce que** la feuille de brasure fort (12) et le point d'assemblage sont chauffés localement.

9. Procédé selon l'une des revendications 1 à 8, **caractérisé en ce qu'**une bobine d'induction entoure le point d'assemblage.

10. Procédé selon la revendication 9, **caractérisé en ce que** les pièces sont assemblées par brasage fort selon un processus de brasage par induction.

11. Procédé selon l'une quelconque des revendications précédentes, **caractérisé en ce qu'**on utilise en tant que feuille de brasure fort (11) une feuille de brasure fort à base de cobalt ou de nickel sur fer.

12. Procédé selon la revendication 11 **caractérisé en ce qu'**on utilise en tant que feuille de brasure fort (11) une feuille de brasure fort présentant au moins 3% de chrome en pourcentage atomique.

13. Procédé selon l'une des revendications 1 à 11, **caractérisé en ce qu'**on utilise en tant que feuille de brasure fort (11) une feuille de brasure fort exempte de chrome.

14. Procédé selon l'une des revendications 1 à 10, **caractérisé en ce qu'**on utilise en tant que feuille de brasure fort (11) une feuille de brasure fort à base de cuivre.

15. Utilisation d'une feuille de brasure fort pour le brasage fort par induction, **caractérisée en ce que** la feuille de brasure fort (11) est une feuille de brasure fort amorphe ou semi-amorphe ayant une teneur en métalloïde comprise entre 10 et 30 % en pourcentage atomique et présente la forme d'une bande annulaire (10) enroulée laquelle est adaptée à la forme des pièces à braser, à un point d'assemblage d'au moins deux pièces, la bande annulaire enroulée (10) présentant un trajet de courant (12) en court-circuit entre au moins deux couches superposées.

16. Utilisation selon la revendication 15 **caractérisé en ce que** la feuille de brasure fort (11) présente une brasure fort à base de cobalt ou nickel sur fer.

17. Utilisation selon la revendication 16, **caractérisée en ce que** la feuille de brasure fort (11) présente une teneur en chrome d'au moins 3% en pourcentage atomique.

18. Utilisation selon la revendication 15, **caractérisée en ce que** la feuille de brasure fort (11) présente un brasage fort à base de cuivre.

19. Utilisation selon l'une quelconque des revendications 15 à 18, **caractérisée** ce que la feuille de brasure fort (11) est disposée sur un point d'assemblage des pièces d'un échangeur de chaleur, d'un catalyseur métallique ou d'un système d'échappement ou d'un filtre à particules métalliques ou d'une conduite de carburant, et les pièces sont assemblées par brasage fort selon le processus de brasage par induction.
